# EUROPEAN PATENT APPLICATION

(11) **EP 4 711 834 A1**
(43) Date of publication of application: **18.03.2026**
(21) Application number: 25191223.4
(22) Date of filing: 23.07.2025
(51) Int. Cl.: G02B 23/04, G02B 23/10, G02B 27/01, G02B 27/10, G02B 23/12

(54) **TELESCOPE AUGMENTED REALITY OPTICAL SYSTEM**

(30) Priority: 11.09.2024 CN 202411273089
(71) Applicant: Kunming Shunho Optics Co., Ltd, Kunming Yunnan 650101 (CN)
(72) Inventor: YANG, Ke, Kunming City (CN); FANG, Chunli, Kunming City (CN)
(74) Representative: Murgitroyd & Company

(57) **Abstract**

The present invention relates to an optical system, and specifically, to a telescope augmented reality optical system. A telescope augmented reality optical system comprises two optical path systems. One optical path system is a telescopic optical path system for realizing a telescopic function, and the other optical path system is an AR optical path system for realizing superimposed extended function information. Compared with a conventional technology, the present invention has the following beneficial effects: The telescope AR optical system of the present invention is easy to use, provides comfortable viewing experience, and produces clearer imaging. **In** the present invention, a projecting method is used. The extended function information is projected onto an eyepiece image plane, so as to be superimposed with the scene content. The superimposed image is magnified by an eyepiece group and then enters the human eye. In this way, a user can directly view a distant scene and the extended function information through an eyepiece.

## Description

### TECHNICAL FIELD

The present invention relates to an optical system, and specifically, to a telescope augmented reality optical system.

### BACKGROUND

With the advancement of science and technology and the development of the market, demands of consumers for telescopes are no longer limited to a single telescopic function. Currently, there are telescopes with a plurality of functions such as distance measurement, compass, level, and object identification on the market. These telescopes may combine information, for example, distance, direction, and name of a scene with the scene being viewed. Most of these telescopes use external display screens or built-in display screens, which often leads to problems such as inconvenience in use, low comfort level during viewing, and poor image quality.

With the continuous advancement of science and technology and the improvement of people's living standards, the telescopes, used as professional scientific instruments in the past, have gradually become accessible to general public, and are essential tools for people's leisure and entertainment, outdoor adventures, stargazing, and other activities. Demands of the consumers for the telescopes are also increasing, and telescopes with functions such as distance measurement, compass, level, and object identification are gradually becoming the preferred choice of the consumers. Currently, most telescopes with the foregoing extended functions on the market employ an AR technology. Augmented reality (AR) is a technology that superimposes digital information on real-world scenes, integrating a computer-generated virtual environment with a real environment around a user based on an optoelectronic display technology, an interaction technology, multiple sensor technologies, and a computer graphics and multimedia technology, to provide the user with a sensory experience where the virtual environment is an integral part of the real environment around the user.

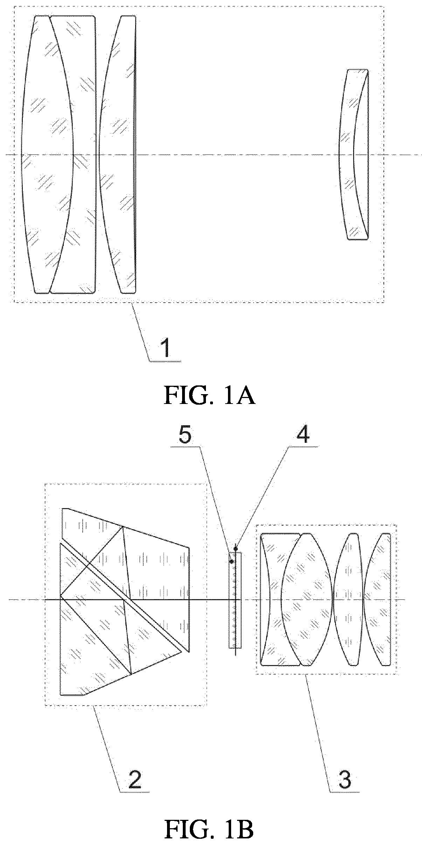

For the telescope, the following structure is generally used.
1. External display screen: In this type of telescope, a display screen is independent of a telescopic optical path system. The display screen is located outside a telescope optical path system. Extended function information is presented on the external display screen through conversion between optical and electrical signals.
2. Built-in display screen: In this type of telescope, a display screen is combined with a telescope system (as shown in FIG. 1A and FIG. 1B). A display screen 5 is arranged at an eyepiece image plane 4 in a telescopic optical path. The display screen may be a liquid crystal display screen or a high-transmittance display screen. Extended function information is displayed on the display screen 5 and then magnified by an eyepiece group 3, so that the magnified image enters a human eye. The user can see the extended function information when viewing a scene.

Although the foregoing structures can provide new functions in addition to the telescopic function, but have the following disadvantages:
1. Inconvenient to use: For a product with an external display screen on the market, extended function information cannot be seen during viewing with an eyepiece. To view the extended function information, the line of sight needs to be moved to the external display screen, which complicates a viewing process and leads to inconvenience in use.
2. Low comfort level: For a product on the market with a built-in display screen, adding the display screen to only a telescopic optical path on one side causes imbalance between left and right optical paths, leading to eye discomfort during viewing.
3. Poor image quality: Whether it is an external display screen or a built-in high-transmittance and liquid crystal display screen, a certain degree of scene distortion is inevitable, affecting image quality.

### SUMMARY

An objective of the present invention is to provide a telescope augmented reality optical system to overcome the disadvantages of conventional technologies.

A specific technical solution used in the present invention is as follows. A telescope augmented reality optical system is provided, and includes two optical path systems, where one optical path system is a telescopic optical path system for realizing a telescopic function; and the other optical path system is an AR optical path system for realizing the superimposed extended function information.

In the telescope augmented reality optical system described above, real image positions of the telescopic optical path system and the AR optical path system are the same and both are located in front of eyepieces.

In the telescope augmented reality optical system described above, the telescopic optical path system includes a telescope objective lens group, a prism group, and an eyepiece group that are arranged in sequence along an optical path, and the real image position is located at an eyepiece image plane in front of the eyepiece group.

In the telescope augmented reality optical system described above, the prism group is a Pechan prism group, includes a roof prism and a half-penta prism, and is configured to invert an object in the optical path into an erect image.

In the telescope augmented reality optical system described above, the AR optical path system includes a display screen configured to display extended function information, a scene on the display screen enters the half-penta prism through a refractor assembly and enters a human eye through the eyepiece group, and the real image position is located at the eyepiece image plane in front of the eyepiece group.

In the telescope augmented reality optical system described above, the refractor assembly includes a first reflector, a first entrance projection objective lens, a second reflector, a second projection objective lens, and a beam splitter prism that are arranged in sequence along an optical path, and the size of the refractor assembly is reduced by folding the optical path.

In the telescope augmented reality optical system described above, the beam splitter prism is an element with a tetrahedral cross section, a side of the beam splitter prism facing the half-penta prism is a bottom surface, another side opposite to the bottom surface is a top surface, two side surfaces are a left side surface and a right side surface, wherein an angle between the top surface and the left side surface is 132°, an angle between the left side surface and the bottom surface is 66°, an angle between the bottom surface and the right side surface is 72°, and an angle between the right side surface and the top surface is 90°.

In the telescope augmented reality optical system described above, a side of the half-penta prism facing the beam splitter prism is provided with a beam splitting film coating.

In the telescope augmented reality optical system described above, the requirement of the beam splitting film is selected based on a type of light to be displayed.

In the telescope augmented reality optical system described above, a diaphragm is arranged between the second reflector and the second objective lens; a diagonal dimension of the display screen after being magnified by the first reflector, the first projection objective lens, and the second reflector is equal to a diameter of the diaphragm; and the diaphragm is configured to effectively reduce the field curvature.

In the telescope augmented reality optical system described above, the first projection objective lens is a cemented doublet or an aspherical lens.

In the telescope augmented reality optical system described above, the first projection objective lens is a first cemented projection objective lens, and the first cemented projection objective lens and the second projection objective lens are symmetrical cemented structures.

In the telescope augmented reality optical system described above, the first projection objective lens is a free-form surface lens.

Compared with a conventional technology, the present invention has the following beneficial effects: The telescope AR optical system of the present invention is easy to use, provides comfortable viewing experience, and produces clearer imaging. In the present invention, a projecting method is used. The extended function information is projected onto an eyepiece image plane, so as to be superimposed with scene content. The superimposed image is magnified by an eyepiece group and then enters the human eye. In this way, a user can directly view a distant scene and the extended function information through an eyepiece.

Specifically, the following three points are included.
1. The present invention is easy to use, and enables the extended function information to be viewed during scene viewing.
2. In the present invention, the display screen content is directly superimposed onto viewed content through projection, to prevent eye discomfort during viewing.
3. The present invention achieves clearer imaging.

### BRIEF DESCRIPTION OF THE DRAWINGS

FIG. 1A is a schematic diagram of a structure of a built-in display screen;
FIG. 1B is a schematic diagram of another structure of a built-in display screen;
FIG. 2 is a schematic diagram of a telescopic optical path system;
FIG. 3 is a schematic diagram of a projection optical path system;
FIG. 4 is a schematic diagram of a position of a beam splitting film and an angle of a beam splitter prism;
FIG. 5 is a schematic diagram of a projection optical path system;
FIG. 6 is a schematic diagram of a structure of a cemented doublet objective lens; and
FIG. 7 is a schematic diagram of a structure of a free-form surface objective lens.

In drawings: 1-the telescope objective lens group; 2-the prism group; 3-the eyepiece group; 4-the eyepiece image plane; 5-the display screen; 6-a beam splitting film coating; 21-the roof prism; 22-the half-penta prism; 23-the display screen; 24-the first reflector; 25-the first projection objective lens; 25-1-the first cemented projection objective lens; 25-2-a free-form surface lens; 26-the second reflector; 27-the diaphragm; 28-the second projection objective lens; 29-the beam splitter prism.

### DETAILED DESCRIPTION

The present invention is further described and illustrated below with reference to the accompanying drawings and specific implementation.

A telescope augmented reality optical system is provided, and includes two optical path systems, where one optical path system is a telescopic optical path system for realizing a telescopic function; and the other optical path system is an AR optical path system for realizing the superimposed extended function information.

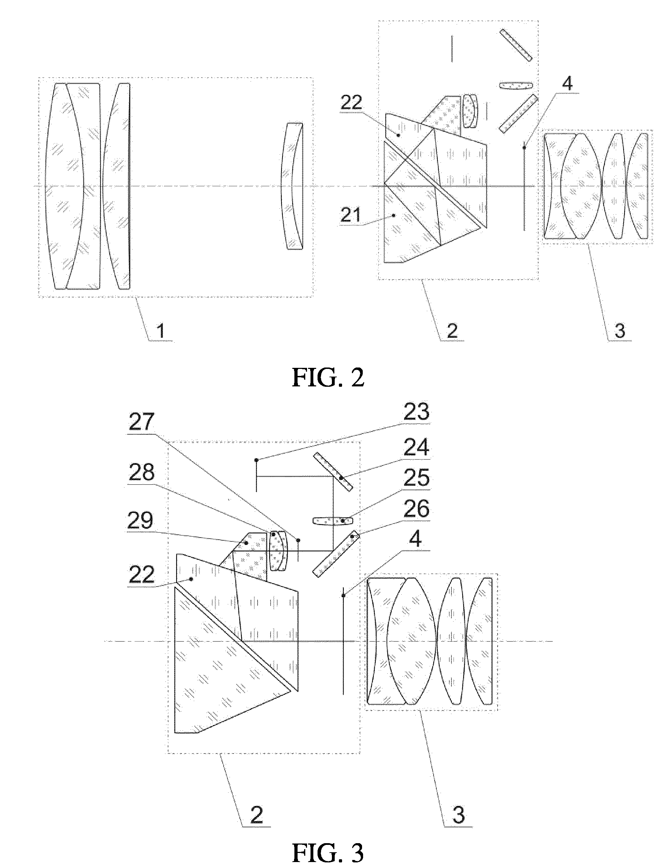

The telescopic optical path system (as shown in FIG. 2) includes a telescope objective lens group, a Pechan prism group, and an eyepiece group. Quantities of objective lens groups and the eyepiece groups are configured according to actual needs. In the telescopic optical path system, a distant scene first passes through the telescope objective lens group 1, and then is inverted into an erect image by a roof prism 21 and a half-penta prism 22 in a Pechan prism group 2 to form a real image on an eyepiece image plane 4, and the real image finally is magnified by the eyepiece group 3, so that the magnified real image is delivered to the eye.

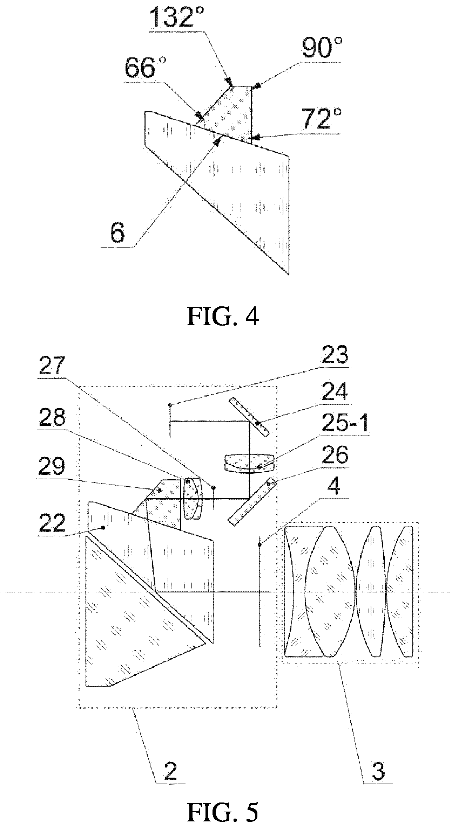

The AR optical path system includes a display screen, two reflectors, two projection objective lenses, and a cemented prism (a beam splitter prism 29 and a half-penta prism 22). Extended function information on a display screen 23 is totally reflected by a first projection objective lens 25 and delivered to a first reflector 24, delivered to a second projection objective lens 28 through a diaphragm 27 after being totally reflected by a second reflector 26, delivered along an optical path to the beam splitter prism 29 vertically, and delivered to the half-penta prism 22 after being split by a beam splitting film 6 (as shown in FIG. 4) on the half-penta prism. Finally, a real image is formed at the eyepiece image plane 4 and is superimposed with the real image formed in the telescopic optical path. Then, the superimposed image is magnified by the eyepiece group 3 and is delivered to the eye.

The beam splitter prism 29 is an element with a tetrahedral cross section. A side of the beam splitter prism 29 facing the half-penta prism 22 is a bottom surface. A side opposite to the bottom surface is a top surface. Two side surfaces are a left side surface and a right side surface. An included angle between the top surface and the left side surface is 132°. An included angle between the left side surface and the bottom surface is 66°. An included angle between the bottom surface and the right side surface is 72°. An included angle between the right side surface and the top surface is 90°.

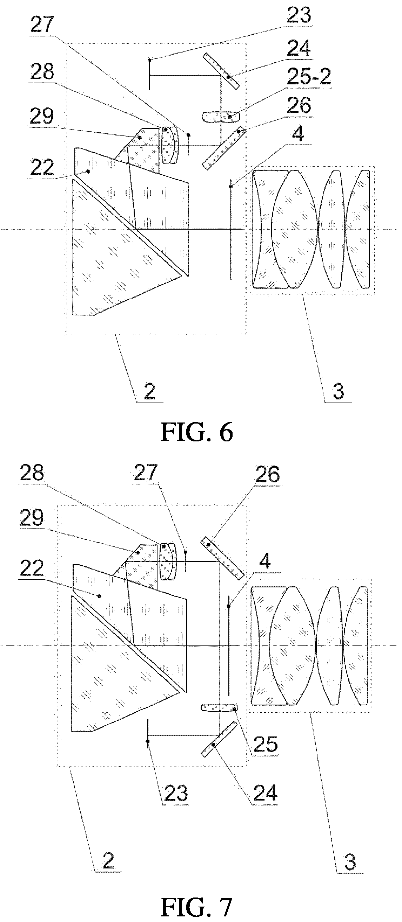

To improve image quality and increase the comfort level, the following methods are mainly used in the present invention:
1. A position, size, and pixel of the display screen match an AR optical system.
   1.1 Position: The display screen needs to be placed on an object-side image plane at the front of the AR optical system.
   1.2 Size: A diagonal dimension of the display screen after being magnified by the first reflector 24, the first projection objective lens 25, and the second reflector 26 is equal to a diameter of the diaphragm 27.
   1.3 Pixel: A pixel size of the display screen needs to match a resolution of the AR optical system. The matching is performed by determining the resolution of the AR optical system based on the pixel size according to an optical empirical formula. An example of the optical empirical formula: If the pixel size of the display screen is 4 µmX4 µm, the resolution of the AR optical system is 1/(2 µmX4 µm)=125 LP/mm.
2. In this way, the field curvature is reduced, the image quality is improved, and the comfort level is increased.
   2.1 A diaphragm is increased. Adding the diaphragm 27 in the AR optical path system, as shown in FIG. 3, can effectively reduce the field curvature.
   2.2 A cemented doublet or an aspherical lens is used. Use of a conventional first projection objective lens 25 is to cause severe field curvature and poor image quality. The foregoing problems can be effectively resolved by using a cemented doublet or an aspherical lens.
      2.2.1 In a cemented doublet solution, the single-piece first projection objective lens 25 in an original structure is replaced with a first cemented projection objective lens 25-1. The schematic diagram of the structure is shown in FIG. 5 below. The first cemented projection objective lens 25-1 and the second projection objective lens 28 need to be of symmetrical cemented structures.
      2.2.2 In an aspherical lens solution, a free-form surface lens is used, and the first cemented projection objective lens 25-1 is replaced with the free-form surface lens 25-2. The schematic diagram of the structure is shown in FIG. 6.
3. The beam splitter prism 29 has a special angle, which is shown in FIG. 4, to improve the transmittance and achieve clearer imaging.
4. The beam splitting film 6 is provided at a position as shown in FIG. 4, to increase the transmittance and improve the image quality.
   4.1 In the beam splitting film, light of a local wavelength band is allowed to enter the half-penta prism 22, and light of other wavelength bands is reflected, so that the influence of stray light is reduced. For example, red light display: when a wavelength is within a range of 400 nm to 670 nm, Tave≤1%; when a wavelength is within a range of 670 nm to 700 nm, Tave≥95%.

In addition, in the AR optical path system, the position of the second reflector 26 may be further adjusted, and part of components is arranged on the other side of the prism group 2 (as shown in FIG. 7) to meet different structure requirements. The remaining components remain the same as structures on the same side as said components (FIG. 3).

## Claims

1. A telescope augmented reality optical system, comprising two optical path systems, wherein one optical path system is a telescopic optical path system for realizing a telescopic function; and the other optical path system is an AR optical path system for realizing superimposed extended function information.

2. The telescope augmented reality optical system according to claim 1, wherein real image positions of the telescopic optical path system and the AR optical path system are the same and both are located in front of eyepieces, the telescopic optical path system comprises a telescope objective lens group (1), a prism group (2), and an eyepiece group (3) arranged in sequence along an optical path, and the real image position is located at an eyepiece image plane (4) in front of the eyepiece group (3).

3. The telescope augmented reality optical system according to claim 2, wherein the prism group (2) is a Pechan prism group, comprising a roof prism (21) and a half-penta prism (22), configured to invert an object in the optical path into an erect image.

4. The telescope augmented reality optical system according to claim 3, wherein the AR optical path system comprises a display screen (23) configured to display extended function information, a scene on the display screen (23) enters the half-penta prism (22) through a refractor assembly, and enters a human eye through the eyepiece group (3), and the real image position is located at the eyepiece image plane (4) in front of the eyepiece group (3).

5. The telescope augmented reality optical system according to claim 4, wherein the refractor assembly comprises a first reflector (24), a first projection objective lens (25), a second reflector (26), a second projection objective lens (28), and a beam splitter prism (29) arranged in sequence along an optical path, and a size of the refractor assembly is reduced by folding the optical path.

6. The telescope augmented reality optical system according to claim 5, wherein the beam splitter prism (29) is an element with a tetrahedral cross section, a side of the beam splitter prism (29) facing the half-penta prism (22) is a bottom surface, another side opposite to the bottom surface is a top surface, two side surfaces are a left side surface and a right side surface, wherein an angle between the top surface and the left side surface is 132°, an angle between the left side surface and the bottom surface is 66°, an angle between the bottom surface and the right side surface is 72°, and an angle between the right side surface and the top surface is 90°.

7. The telescope augmented reality optical system according to claim 6, wherein a side of the half-penta prism (22) facing the beam splitter prism (29) is provided with a beam splitting film coating, and a requirement of the beam splitting film is selected based on a type of light to be displayed.

8. The telescope augmented reality optical system according to claim 7, wherein a diaphragm (27) is arranged between the second reflector (26) and the second objective lens (28); a diagonal dimension of the display screen after being magnified by the first reflector (24), the first projection objective lens (25), and the second reflector (26) is equal to a diameter of the diaphragm (27); and the diaphragm (27) is configured to effectively reduce a field curvature.

9. The telescope augmented reality optical system according to claim 8, wherein the first projection objective lens (25) is a cemented doublet or an aspherical lens.

10. The telescope augmented reality optical system according to claim 9, wherein the first projection objective lens (25) is a first cemented projection objective lens (25-1), and the first cemented projection objective lens (25-1) and the second projection objective lens (28) are symmetrical cemented structures.

11. The telescope augmented reality optical system according to claim 10, wherein the first projection objective lens (25) is a free-form surface lens (25-2).
